# EUROPÄISCHE PATENTSCHRIFT

(11) **EP 2 535 090 B1**
(45) Veröffentlichungstag und Bekanntmachung des Hinweises auf die Patenterteilung: **18.04.2018**
(21) Anmeldenummer: 11170038.1
(22) Anmeldetag: 15.06.2011
(51) Int. Cl.: A63B 55/60, A63B 55/30

(54) **Koppelbare Antriebseinheit**
Coupleable drive unit
Unité d'entraînement pouvant être couplée

(43) Veröffentlichungstag der Anmeldung: 19.12.2012
(73) Patentinhaber: EWR Aktiengesellschaft, 67547 Worms (DE)
(72) Erfinder: Schwenk, Peter, 67271 Neuleiningen (DE); Thalhofer, Ludwig, 72663 Großbettlingen (DE)
(74) Vertreter: Westphal, Mussgnug & Partner Patentanwälte mbB

(56) Entgegenhaltungen:
- WO-A1-2007/013084
- AU-B2- 596 485
- DE-A1-102007 062 406
- DE-U1-202010 011 794
- US-A- 3 575 250
- US-A- 3 583 510
- US-A- 4 771 840

## Beschreibung

Die Erfindung betrifft eine Antriebseinheit zum Koppeln mit einer Lenkeinheit für ein mehrachsiges Fahrzeug zur Beförderung eines Passagiers gemäß dem Oberbegriff des Patentanspruchs 1.

Aus dem Stand der Technik sind Fahrzeuge zur Beförderung eines Passagiers bekannt, die aus einer Antriebseinheit und einer Steuereinheit bestehen, welche miteinander koppelbar sind und das mehrachsige Fahrzeug bilden.

So ist beispielsweise aus der US 3,583,510 ein motorgetriebenes zweispuriges Landfahrzeug bekannt, welches einen hinteren Abschnitt mit einem Rahmen und einem Verbrennungsmotor sowie einer Deichsel umfasst. Die Deichsel ist gelenkig mit einem einachsigen Vorderabschnitt verbunden, der in einem verbundenen Zustand zum Steuern des Landfahrzeugs ausgebildet ist. In einem abgekoppelten Zustand kann der einachsige Vorderabschnitt als handgeführter Golf-Trolley verwendet werden.

Derartige Fahrzeuge weisen den Nachteil auf, dass eine Nutzung des Fahrzeugs bisher umständlich und unkomfortabel ist. So ist beispielsweise die Kopplung des Vorderabschnitts mit dem hinteren Abschnitt aufgrund der Kopplungsvorrichtung mittels eines Bolzens mit Sicherung nachteilig, da die Einzelteile beim Auseinander- und Zusammenbauen leicht verloren gehen können und sich auch im gekoppelten Zustand leicht lösen.

Des Weiteren lassen sich derartige Fahrzeuge nur sehr schwer und umständlich steuern und neigen aufgrund ihres erhöhten Aufbaus leicht dazu, über die Hinterachse oder seitlich zu kippen. Insbesondere in Geländen mit Steigungen und Gefällen, wie beispielsweise in dem vorgesehenen Einsatzgebiet auf Golfplätzen, tritt dieses Verhalten verstärkt hervor. Auch besteht je nach einer entsprechenden Fahrsituation die Gefahr, dass das Fahrzeug aufgrund eines entlasteten Vorderabschnitts nicht und nur eingeschränkt lenkbar ist oder aufgrund eines entlasteten hinteren Abschnitts eine eingeschränkte Traktion oder Bremswirkung auftritt. Neigt sich das Fahrzeug stark oder kippt dieses um und gelingt es einem Fahrer bzw. einem Passagier nicht mehr schnell genug sich in diesem Falle rechtzeitig in Sicherheit zu bringen, besteht die Gefahr von schweren Verletzungen, insbesondere für den Fall dass die Person unter dem umgekippten Fahrzeug eingeklemmt wird.

Des Weiteren ist als Vorderabschnitt eine speziell ausgebildete Vorrichtung erforderlich, die entsprechend koppelbar ausgebildet ist und somit entsprechende Kosten verursacht.

Die US 3 575 250 A zeigt ein elektrisch angetriebenes Gefährt, welches mittels eines Schnellverschlusses mit einem fahrbaren Einkaufswagen oder dergleichen verbindbar ist.

In der WO 2007/013084 A1 ist ein teilbares, batteriebetriebenes Golf-Cart beschrieben, welches zwei Betriebszustände zulässt, einen Fahrmodus, in dem der Golfer auf dem Cart stehend über den Golfplatz fährt, und einem Laufmodus, in welchem der Golfer hinter dem Cart läuft.

In der US 4,771,840 A ist ein Gefährt für Personen mit Handicap zur Erleichterung eines Einkaufs offenbart. Das Gefährt umfasst einen Einkaufswagen, an welchem eine Antriebseinheit mit einem Fahrersitz befestigt werden kann, um bequem und sicher durch ein Einkaufszentrum zu fahren.

Aufgabe der Erfindung ist es daher, ein Fahrzeug bereitzustellen, das eine Antriebseinheit und eine hiermit koppelbare Lenkeinheit umfasst und wenigstens einige der genannten Nachteile zumindest teilweise reduziert oder sogar beseitigt.

Die Aufgabe wird gelöst mit einem mehrachsigen Fahrzeug gemäß Patentanspruch 1.

Vorteilhafte Ausgestaltungsformen ergeben sich aus den Unteransprüchen.
Demnach wird ein mehrachsiges Fahrzeug zum Befördern mindestens eines Passagiers mit einer Antriebseinheit und einer mit der Antriebseinheit gekoppelten Lenkeinheit bereitgestellt, wobei die Antriebseinheit zum Koppeln mit der Lenkeinheit zur Beförderung des mindestens einen Passagiers ausgebildet ist und mit
- einem Fahrgestell, welches als Trägerstruktur der Antriebseinheit ausgebildet ist,
- einem Antriebsmodul mit einem Motor und einer ersten Achse mit Rädern zum Antreiben des Fahrzeugs,
- einer Kopplungsvorrichtung zum Koppeln der Antriebseinheit mit der Lenkeinheit,
- einem Bedienelement zum Bedienen des Antriebsmoduls, und
- einer Sitzanordnung zum Stützen des Passagiers.
Außerdem ist die Antriebseinheit derart konfiguriert, dass ein Gesamtmassenschwerpunkt der Antriebseinheit in Längsrichtung des Fahrzeugs vor der ersten Achse angeordnet ist. Zusätzlich umfasst das Fahrgestell eine Federung der ersten Achse, und die Kopplungsvorrichtung eine Kugelkopfkupplung zum Verbindung der Antriebseinheit mit der Lenkeinheit.

Dies bedeutet, dass die Antriebseinheit und die Lenkeinheit in einem gekoppelten Zustand gemeinsam das mehrachsige Fahrzeug bilden, das zum Transport eines Passagiers, insbesondere eines Fahrers, dienen kann. Hierzu stellt die Antriebseinheit die zumindest eine erste Achse bereit, die vorzugsweise an einem linken Ende und an einem gegenüberliegenden rechten Ende der Achse jeweils mindestens ein Rad umfasst. Vorzugsweise wird von der gekoppelten Lenkeinheit ebenfalls eine Achse mit zumindest einem Rad, vorzugsweise mindestens zwei Rädern bereitgestellt, so dass das Fahrzeug mindestens zweiachsig als Drei- oder Vierrad ausgebildet ist.

Das beschriebene Antriebsmodul zum Antreiben des Fahrzeugs umfasst den Motor, der beispielsweise als Elektromotor ausgebildet ist. Selbstverständlich ist grundsätzlich auch der Einsatz eines Verbrennungsmotors möglich. Bedient wird das Antriebsmodul mittels eines Bedienelements, das beispielsweise ein Gaspedal und/oder ein Bremspedal umfassen kann und somit ein Steuern des Motors ermöglicht. Ebenso kann das Bedienelement ein Steuerungsmodul umfassen, welches nachfolgend noch näher beschrieben wird, mit Schaltern und Reglern für weitere Funktionen des Fahrzeugs, beispielsweise einen Gangwechsel eines Getriebes oder eine Umkehr einer Motordrehrichtung zum Rückwärtsfahren des Fahrzeugs, eine Geschwindigkeitsregelung, eine Richtungsänderung bzw. eine Lenksteuerung, eine Anfahrverzögerung, eine Dämpfungssteuerung einer Fahrzeugfederung, eine Lade- und Entladesteuerung eines Energiespeichers, einen Überlastungsschutz und weitere Steuer- und Überwachungsfunktionen des Fahrzeugs, wie eine Füllstandanzeige des Energiespeichers, eine verbleibende Reichweite, eine zurückgelegte Wegstrecke, eine benötigte Zeit, Navigationsdaten usw.

Ferner kann das Steuerungsmodul bzw. das gesamte Bedienelement eine zusätzliche Dämpfungssteuerung zum Dämpfen von Bewegungsänderungen des Fahrzeugs umfassen, insbesondere eine Dämpfungssteuerung für ein möglichst ruckfreies Anfahren und/oder Bremsen des Fahrzeugs und/oder für den Fall eines Gangwechsels eine Dämpfung für einen sanften, ruckfreien Gangwechsel.

Das Bedienelement kann je nach Ausgestaltung fest mit dem Fahrzeug verbunden oder als abnehmbares Bauteil vorgesehen sein.

Die ebenfalls beschriebene Kopplungsvorrichtung ist dazu vorgesehen und ausgebildet, eine Verbindung zwischen der Antriebseinheit und der Lenkeinheit bereitzustellen. Vorzugsweise ist diese möglichst einfach handhabbar und zuverlässig ausgeführt. Beispielhafte Ausführungsformen werden nachfolgend beschrieben.

Um dem einen oder mehreren Passagieren einen sicheren und komfortablen Halt auf dem Fahrzeug bereitzustellen, ist die Sitzanordnung vorgesehen. Auch sie wird nachfolgend noch näher erläutert.

Die Antriebseinheit und somit auch das Fahrzeug weisen vorzugsweise einen besonders sicheren Stand bzw. auch beim Fahren eine hohe Fahrsicherheit, insbesondere auch in einem schweren Gelände, auf. Hierzu zählen insbesondere Gelände mit Steigungen und Gefällen, so dass ein sicheres bergauf- und bergabfahren ermöglicht wird, ohne dass das mehrachsige Fahrzeug kippt. Ebenso wird eine verminderte Lenkwirkung durch ein Abheben von Rädern der Lenkeinheit oder ein Verlust von Bremsleistung durch eine zu große Entlastung der ersten Achse der Antriebseinheit verhindert. Dies wird erzielt, indem die Antriebseinheit entsprechend der bereits gegebenen Beschreibung derart konfiguriert ist, dass der Gesamtmassenschwerpunkt vor der ersten Achse angeordnet ist.

Diese beschriebene Relativposition des Gesamtmassenschwerpunktes bezieht sich auf eine Längsrichtung des Fahrzeugs, so dass eine Orientierung jeweils bezogen auf die Fahrtrichtung des Fahrzeugs zu verstehen ist. Der Gesamtmassenschwerpunkt liegt also in Fahrrichtung des Fahrzeugs VOR der ersten Achse, die demnach entgegen der Fahrtrichtung hinter dem Gesamtmassenschwerpunkt angeordnet ist und somit eine Hinterachse des Fahrzeugs bildet.

Um die Antriebseinheit sicher und stabil zu gestalten und eine gewünschte Position des Gesamtmassenschwerpunktes zu erzielen, sind insbesondere aufeinander abgestimmte Gewichtsschwerpunkte einzelner Komponenten in Verbindung mit angepassten Abständen dieser Komponenten zu der ersten Achse erforderlich, so dass auftretende Momente des Gesamtmassenschwerpunktes um die erste Achse möglichst klein gehalten werden können. Auf diese Weise ist eine notwendige Achsbelastung sowohl der Lenkeinheit und insbesondere auch der Antriebseinheit gewährleistet, so dass eine optimale Handhabbarkeit bzw. Lenkbarkeit der gelenkten Räder sowie eine ausreichende Traktion der Antriebsräder erzielt wird. Aufgrund der beschriebenen Gesamtmassenschwerpunktlage bleiben beim Beschleunigen oder Abbremsen entstehende Drehmomente ohne nachteilige Wirkung auf die einzelnen Achslasten.

Selbstverständlich kann dennoch nicht jede beliebige Steigung sicher befahren werden. Vielmehr sind die Angaben der Beschreibung im Wesentlichen auf Gelände zu lesen, wie sie üblicherweise mit derartigen Fahrzeugen befahren werden. Dies sind beispielsweise Straßen, Wege, Feldwege und leichte Gelände. Ebenfalls befahrbar sind hiermit schwierige Gelände, wie sie beispielsweise auf Golfplätzen anzutreffen sind. Ein optimaler Abstand des Gesamtmassenschwerpunktes zu der ersten Achse wird nachfolgend mit Bezugnahme auf die Figuren beschrieben. Vorzugsweise ist die Antriebseinheit derart abgestimmt, dass ein Kippdrehmoment nahe dem Gesamtmassenschwerpunkt angeordnet ist.

Gemäß einer Ausführungsform umfasst das Antriebsmodul außerdem einen Energiespeicher zum Betreiben des Motors und/oder außerdem mindestens eine zweite Achse mit Rädern, wobei die zweite Achse in Längsrichtung des Fahrzeugs vor der ersten Achse und parallel zu dieser angeordnet ist.

Als Energiespeicher kommt beispielsweise ein Akku zum Bereitstellen von elektrischer Energie für den als Elektromotor ausgebildeten Motor in Betracht. Insbesondere können Lithium-Ionen Akkus oder Gelbatterien zum Einsatz kommen. Optional können die Energiespeicher leicht austauschbar ausgebildet sein.

Im Falle eines Verbrennungsmotors sind dementsprechende Brennstoffe, wie beispielsweise Benzin, Diesel oder Wasserstoff in entsprechend geeigneten Behältnissen vorzusehen. Selbstverständlich können ebenso andere bekannte alternative Energiequellen zum Betrieb des Motors vorgesehen werden. Aufgrund des üblicherweise erheblichen Massenbeitrages des Energiespeichers, ist dieser ebenfalls derart angeordnet, dass der Gesamtmassenschwerpunkt der Antriebseinheit weiterhin vor der ersten Achse angeordnet ist, um die voranstehend beschriebene stabile Wirkung zu erzielen. Dies kann erreicht werden, indem der Energiespeicher vorzugsweise ebenfalls vor der ersten Achse angeordnet ist.

Ebenfalls zur Stabilität des Fahrzeugs bzw. der Antriebseinheit trägt die beschriebene Ausführung bei, wonach außerdem die mindestens eine zweite Achse vorgesehen werden kann. Beispielsweise kann die zweite Achse vor der ersten Achse in geringem Abstand zu dieser angeordnet werden, so dass eine Doppelachse bereitgestellt wird. Hierbei bleibt die "erste Achse" jedoch die hinterste Achse, auf die sich alle Positions- und Wirkungsangaben beziehen. Der Gesamtmassenschwerpunkt muss also weiterhin vor der ersten Achse liegen. Jedoch bietet eine derartige Ausführungsform den Vorteil einer geringeren Flächenbelastung des Untergrundes aufgrund einer größeren Auflagefläche.

Entsprechend einer anderen Ausführungsform umfasst der Motor eine Motorwelle, welche parallel zu der ersten und/oder der zweiten Achse angeordnet ist und mittels Übertragungsmitteln eine Drehbewegung der Motorwelle in eine Drehbewegung der ersten und/oder der zweiten Achse und/oder der jeweiligen Räder zum Antreiben des Fahrzeugs überträgt.

Dies bedeutet, dass der Motor mit seiner Motorwelle ebenfalls parallel zu einer der Achsen ausgerichtet ist. Auf diese Weise kann der Motor mit möglichst geringem Abstand an den Achsen positioniert werden, so dass der Massenschwerpunkt des Motors ebenfalls einen geringen Abstand zu einer der Achsen aufweist. Aufgrund des sich hieraus ergebenden kurzen Hebelarms wird ein verursachtes Dreh- bzw. Kippmoment reduziert. Vorzugsweise ist der Motor unmittelbar über oder vor der ersten Achse angeordnet. Als Übertragungsmittel kommen beispielsweise Zahnradgetriebe mit oder ohne Gangschaltung oder ein Riemen- oder Kettenantrieb in Betracht. Ebenso sind andere bekannte Systeme zur Übertragung einer Drehbewegung einsetzbar.

Des Weiteren kann die erste Achse und/oder die mindestens eine zweite Achse jeweils ein Differential umfassen. Somit können die an den Achsen angeordneten Räder mittels des Differentials bzw. des entsprechenden Differentialgetriebes voneinander entkoppelt werden, um eine ausreichende Traktion insbesondere beim Schlupf eines Rades auf entsprechendem Untergrund, beispielsweise rutschigem Untergrund oder auf Gras, zu gewährleisten. Die Wirkungsweise eines Differentials ist allgemein bekannt, so dass auf dessen Wirkungsweise und Funktion nicht näher eingegangen wird.

Vorzugsweise wird das Differential bezogen auf die Längsrichtung des Fahrzeugs links oder rechts neben dem Motor angeordnet, so dass der Motor möglichst nahe zu der Achse verbaut werden kann und somit eine Bauhöhe möglichst gering ausfällt, wodurch ebenfalls eine niedrige Schwerpunktlage erzielt werden kann.

Gemäß einer anderen Ausführungsform umfasst der Motor mindestens ein Paar Nabenmotoren mit jeweils einer Motorwelle, wobei die beiden Motorwellen des Nabenmotorenpaars gemeinsam die erste oder die zweite Achse bilden und jeweils einer der Nabenmotoren einem linken Rad und der andere Nabenmotor dem rechten Rad der ersten oder zweiten Achse zugeordnet sind. Dies bedeutet, dass die Nabenmotoren direkt mit dem jeweiligen anzutreibenden Rad verbunden sind. Es erfolgt somit ein dezentraler Antrieb der Räder im Gegensatz zu einem zentralen Antrieb mittels eines einzigen Motors. Es kann somit auf Getriebe und Achswellen verzichtet werden, wodurch zusätzliches Gewicht eingespart werden kann. Außerdem ermöglicht diese Ausführungsform eine besonders vorteilhafte Massenkonzentration der Motormasse im Bereich der Achsen. In diesem Fall sind die beschriebenen "Achsen" als virtuelle Achsen zu verstehen, da lediglich die jeweiligen Wellen in den Nabenmotoren bzw. in den Rädern vorhanden sind, jedoch keine durchgängigen Achsen. Dennoch sollen diese als die entsprechenden Achsen im Sinne dieser Beschreibung verstanden werden.

Vorzugsweise ist auch ein Massenschwerpunkt der Sitzanordnung in einem unbelasteten und/oder in einem durch einen Passagier belasteten Zustand in Längsrichtung des Fahrzeuges vor der ersten Achse angeordnet. Als Sitzanordnung kann beispielsweise ein relativ zu der Antriebseinheit und deren Antriebsmodul erhöht angeordneter Sitz vorgesehen werden, um dem Passagier bzw. dem Fahrer eine Sitzmöglichkeit bereitzustellen. Dieser Sitz kann als Sitz mit einer Sitzfläche und einer relativ hierzu angewinkelten Rückenlehne ausgeführt sein.

Alternativ ist aber auch eine sattelförmige Sitzbank für einen oder mehrere Passagiere einsetzbar. Diese ermöglicht einem Passagier in vorteilhafter Weise seine Position und somit sein Körpergewicht in Abhängigkeit von dem jeweils befahrenen Gelände und der hierzu optimalen Schwerpunktlage auf der Sitzbank zu verschieben. So bringt beim Bergauffahren ein "nach vorn rutschen" des Passagiers eine Schwerpunktverlagerung nach vorne und dadurch eine zusätzliche Sicherheit gegen ein Kippen des Fahrzeugs nach hinten.

Vorzugsweise ist ein Einleitungspunkt einer Gewichtkraft der Sitzanordnung auf das Fahrgestell ebenfalls vor der ersten Achse angeordnet. Eine gleiche Anordnung kann in ebenfalls vorteilhafter Weise für den Massenschwerpunkt der Sitzanordnung vorgesehen sein, entweder in einem mit einem Passagier belasteten oder auch in einem unbelasteten Zustand.

Entsprechend einer weiteren Ausführungsform umfasst das Fahrgestell einen steifen Rahmen, welcher insbesondere teil- oder faltbar ausgebildet ist, und/oder außerdem Fußrasten umfasst zum Aufsetzen von Füßen des mindestens einen Passagiers bzw. eines Fahrers, wobei die Fußrasten in Längsrichtung des Fahrzeugs vor der ersten Achse angeordnet sind. Der steife Rahmen verhindert eine Verdrehung der Antriebseinheit und somit eine unbeabsichtigte Verschiebung bzw. Verlagerung des Gesamtmassenschwerpunktes, so dass eine stabile Fahrsituation und eine höhere Gesamtstabilität des Fahrzeugs erzielt wird. Der Rahmen kann beispielsweise aus Stahl, Leichtmetall und/oder Faserverbundwerkstoffen, insbesondere Kohlefaser- oder Glasfasermaterial, gefertigt sein.

Zusätzlich und rein optional kann der Rahmen gemäß der Beschreibung teilbar oder faltbar ausgeführt sein. Dies ermöglicht einen Raumbedarf der Antriebseinheit zu verringern, so dass die Antriebseinheit bzw. das gesamte Fahrzeug leichter transportiert und hierzu beispielsweise in einen Kofferraum eines Personenkraftwagens verladen werden kann. Vorzugsweise kann hierzu außerdem das Antriebsmodul von dem Fahrgestell abnehmbar ausgeführt sein, so dass das Antriebsmodul separat verladen und das verbleibende Fahrgestell teil- und/oder faltbar ist. Neben einer Teilbarkeit des Rahmens im speziellen kann eine allgemeine Zerlegbarkeit des Fahrzeugs, insbesondere der Antriebseinheit, vorgesehen werden. Hierzu können die Sitzanordnung und/oder eine Fahrzeugverkleidung, insbesondere eine Verkleidung des Energiespeichers oder des Motors, abnehmbar ausgestaltet sein. Darüber hinaus können optional das Antriebsmodul und/oder die Energiespeicher abnehmbar sein. Jede der abnehmbaren Komponenten kann durch eine Schnellteilungsmöglichkeit leicht lösbar mit dem Fahrgestell verbunden und somit entfernbar sein. Entsprechende Vorrichtungen zum lösbaren Fixieren derartiger Komponenten sind bekannt, so dass deren Ausgestaltung und Funktionsweise nicht näher erläutert wird.

Um eine definierte Position und einen sicheren Halt des Passagiers bzw. des Fahrers auf dem Sitz der Antriebseinheit zu gewährleisten, sind die beschriebenen Fußrasten vorgesehen. Sie ermöglichen eine Auflage der Füße und führen somit dazu, dass der Passagier eine bestimmte vordefinierte Position einnimmt. Auf diese Weise kann der Massenschwerpunkt des Passagiers im Wesentlichen vorherbestimmt und platziert werden. Vorzugsweise befindet sich dieser ebenfalls vor der ersten Achse. Ein als optimal anzusehender Wert für den Abstand der Fußrasten von der ersten Achse wird nachfolgend beschrieben.

Vorzugsweise sind die beschriebenen Fußrasten seitlich an der Antriebseinheit bzw. dem Fahrgestell befestigt und möglichst derart angeordnet, dass diese nicht in einen Lenkradius der Lenkeinheit eingreifen, wenn diese entsprechend eingeschlagen wird. Die seitliche Anordnung der Fußrasten erlaubt einen optimalen Gewichtsausgleich des Passagiers beim Fahren in Schräglage oder in einem unebenen Gelände.

Gemäß einer weiteren Ausführungsform umfasst das Fahrwerk eine Federung der ersten und/oder der mindestens einen zweiten Achse, insbesondere eine Federung umfassend mindestens einen Stoßdämpfer und/oder mindestens eine Feder und/oder mindestens einen Federarm für eine federnde Aufhängung der ersten und/oder zweiten Achse.

Es ist demnach möglich neben einer rein starren Achsaufhängung auch eine gefederte Ausführung vorzusehen. Beispielsweise kann ein separater Federarm für jedes einzelne Rad einer jeweiligen Achse vorgesehen werden, so dass eine Einzelradaufhängung bereitgestellt wird. Ebenso kann eine komplette Achse mittels Federarmen an dem Fahrgestell angelenkt sein, so dass eine Pendelachse bzw. eine beweglich gelagerte Starrachse bereitgestellt wird. Als Federn kommen bekannte Federungssysteme für Fahrzeuge in Betracht, also unter anderem Spiral- und/oder Blattfedern sowie Elastomerdämpfer. Des Weiteren kann das Dämpfungsverhalten mit Stoßdämpfern, insbesondere pneumatischen oder hydraulischen Systemen, verbessert werden.

Die Ausgestaltung einer derart gefederten Aufhängung ermöglicht eine verbesserte Geländegängigkeit und ein sichereres Fahrverhalten, insbesondere im Gelände, da eine verbesserte Bodenhaftung auch bei unebenem Gelände erzielt werden kann. Zusätzlich wird der Fahrkomfort auf allen Untergründen verbessert.

Außerdem kann die Kopplungsvorrichtung eine Deichsel umfassen, insbesondere eine starr, lenkbar, klappbar, teilbar und/oder abnehmbar ausgebildete Deichsel. Diese ist vorzugsweise Teil des Fahrgestells und erstreckt sich in Längsrichtung von dem Antriebsmodul weg zum Koppeln der gesamten Antriebseinheit mit der Lenkeinheit. Eine Teilbarkeit der Deichsel erlaubt es, die Antriebseinheit zumindest teilweise auseinanderzubauen, um sie leichter transportieren zu können. Hierzu kann die Deichsel alternativ auch komplett abnehmbar ausgestaltet sein.

Beispielsweise kann die Kopplungsvorrichtung außerdem eine Steckverbindung zum steckbaren Verbindung der Antriebseinheit mit der Lenkeinheit oder eine Kugelkopfkupplung zum Verbindung der Antriebseinheit mit der Lenkeinheit umfassen. Es können grundsätzlich alle bekannten Kopplungsvorrichtungen vorgesehen werden, die sich für eine derartige Kopplung eignen. Vorzugsweise wird jedoch die steckbare Verbindung vorgesehen, um eine sichere, schnelle und leicht handhabbare Verbindung zu der Lenkeinheit bereitzustellen, so dass die Antriebseinheit auf einfache Art und Weise von der Lenkeinheit abgekoppelt bzw. an diese angekoppelt werden kann. Eine Kugelkopfvorrichtung bietet ebenfalls die genannten Vorzüge. In diesem Fall kann auf einem der beiden zu verbindenden Elemente - Kopplungsvorrichtung der Antriebseinheit oder der Lenkeinheit - ein Kugelkopf bereitgestellt sein. Dieser wird von einer an dem jeweils anderen Element ausgebildeten Aufnahme drehbeweglich umgriffen, so dass die Lenkeinheit zum Lenken der Antriebseinheit mittels der Kugelkopfvorrichtung relativ zu dieser um alle Raumachsen schwenkbar ist. In bevorzugter Weise umfasst die Kugelkopfkupplung außerdem eine Sicherung gegen selbstädniges Auskuppeln.

Zusätzlich ist es möglich, dass das Antriebsmodul eine Anhängevorrichtung zum Verbinden mit einer Anhängereinheit (im Folgenden auch kurz: "Anhänger") umfasst, insbesondere eine zum Transportieren mindestens eines weiteren Passagiers ausgebildete Anhängereinheit. Hierzu kann die Anhängevorrichtung am Heck des Fahrzeugs bzw. an der entsprechenden Hinterseite der Antriebseinheit angeordnet sein und mit einem fahrbaren Anhänger gekoppelt werden. Als Anhängevorrichtungen kommen insbesondere bereits bekannte Kopplungsvorrichtungen für Anhänger in Betracht. Die Anhängevorrichtung kann vorzugsweise aber auch derart an die Antriebseinheit angeschlossen werden, dass der Anhänger als Stütze für das Fahrzeug bzw. die Antriebseinheit wirkt. Eine Achse des Anhängers bzw. die daran befestigten Räder wirken somit als Stützräder um eine Kippbewegung des Fahrzeugs nach hinten abzustützen und somit zu verhindern.

Gemäß einer bevorzugten Ausführungsform kann der Anhänger ein Trittbrett zum Transport einer hierauf stehenden Person umfassen. Zusätzlich können an dem Anhänger oder an der Antriebseinheit ein oder mehrere Haltegriffe für die auf dem Anhänger stehende Person vorgesehen sein.

Wie bereits voranstehend angemerkt, kann die Antriebseinheit Bremsen umfassen, die dazu ausgebildet sind, an der ersten und/oder der mindestens einen zweiten Achse und/oder an mindestens einem der Räder im Bedarfsfall eine Bremswirkung zum Bremsen des Fahrzeugs einzubringen. Die Bremsen können also wahlweise an einer Achse oder an mehreren Achsen und/oder Rädern angebracht sein. Einsetzbar sind insbesondere Magnetbremsen oder Trommelbremsen sowie Scheibenbremsen, jedoch können ebenso eine Motorbremse oder andere bekannte Bremssysteme Verwendung finden. Betätigt werden die Bremsen von dem Passagier bzw. Fahrer des Fahrzeugs über das genannte Bedienelement.

Dieses kann Fußpedale oder Bremshebel umfassen. Letztere können statt an der Antriebseinheit ebenso an der Lenkeinheit angeordnet sein, beispielsweise ähnlich den Bremshebeln eines Fahrradlenkers oder als separate Vorrichtung in Form des nachfolgend beschriebenen Steuermoduls anbringbar sein.

Ferner kann eine dem zu befahrenden Gelände angepasste Bereifung der Räder vorgesehen werden. In unebenem Gelände mit losem Untergrund oder auf Gras bietet es sich an, eine breite Aufstandsfläche mit entsprechend breiter Bereifung vorzusehen. So können beispielsweise walzenartige Reifen, Ballonreifen oder luftgefüllte Reifen vorgesehen werden. Letztere erlauben durch ein Ablassen von Luft eine Anpassung an das Gelände für eine verbesserte Traktion. Die Reifen sind vorzugsweise in ihrer Breite derart dimensioniert, dass sie die Antriebsposition und die Lenkposition beibehalten können, ohne dem Gelände Schäden zuzufügen. Dies ist beispielsweise auf dem Fairway eines Golfplatzes von Vorteil.

Zusätzlich wird eine Lenkeinheit zum Koppeln mit der beschriebenen Antriebseinheit bereitgestellt. Die Lenkeinheit umfasst mindestens eine Achse mit Rädern. Insbesondere kann die Lenkeinheit derart ausgebildet sein, dass die Lenkeinheit in einem von der Antriebseinheit abgekoppelten Zustand ein eigenständig nutzbares, fahrbares Gefährt mit der mindestens einen Achse bildet und vorzugsweise aus einer Gruppe bestehend aus einem Golftrolley, einem Handwagen, einem Gehwagen und einem Rollator ausgewählt und/oder die Lenkeinheit zur Aufnahme von Taschen, Golfbags, Koffer, Kisten und/oder Sitzen ausgebildet ist.

Somit ist die Lenkeinheit von der Antriebseinheit abkoppelbar ausgeführt und ist in diesem Zustand handgeführt nutzbar. Um die Lenkeinheit in einem gekoppelten Zustand mit der Antriebseinheit zu verbinden, kann die Lenkeinheit ein Gegenstück zur Aufnahme der Koppelvorrichtung der Antriebseinheit umfassen. Wie bereits beschrieben, kann zur Verbindung ebenso eine Steckverbindung vorgesehen sein, die den Vorteil einer besonders einfachen und schnellen Handhabbarkeit bietet.

Aufgrund der Abkoppelbarkeit ist die Lenkeinheit beispielsweise gegen eine andere Lenkeinheit im Bedarfsfall leicht austauschbar. So kann beispielsweise der Golftrolley gegen einen Gehwagen oder einen Einkaufswagen ausgetauscht werden. Hierbei kann die Lenkeinheit ein- oder zweiachsig mit einem, zwei, drei oder vier Rädern ausgebildet sein. Selbstverständlich sind aber auch mehr als zwei Achsen bzw. mehr als vier Räder möglich. Mindestens eines der Räder kann darüber hinaus optional als sogenanntes "Swivel"-Rad oder starr ausgebildet sein. Außerdem können die mindestens eine Achse oder das mindestens eine Rad der Lenkeinheit bremsbar sein. Auch hierzu sind bekannte Bremssysteme einsetzbar, wie Scheibenbremsen, Magnetbremsen, Trommelbremsen usw. Ferner kann die Lenkeinheit mehrteilig aufgebaut sein und vorzugsweise teilbar oder sogar zusammenfaltbar ausgebildet sein, um einen einfachen Transport zu ermöglichen.

In jedem Fall dient die Lenkeinheit jedoch dazu von dem Passagier des Fahrzeugs zum Lenken des Fahrzeugs eingesetzt zu werden. Die Lenkeinheit muss also gelenkig mit der Antriebseinheit verbunden sein, um eine Lenkbewegung ausführen zu können, der die Antriebseinheit anschließend folgt. Die Lenkeinheit umfasst hierzu insbesondere einen Lenkerabschnitt ähnlich einem Fahrrad- oder Motorradlenker oder einen Griffabschnitt der voranstehend genannten Gefährte. In diesem Fall erfolgt eine Richtungsänderung des Fahrzeugs also durch Richtungsänderung einer Achse der Lenkeinheit um deren Mittelpunkt.

Alternativ ist ebenso eine starre Verbindung der Lenkeinheit mit der Antriebseinheit möglich. Jedoch muss in diesem Fall die Lenkeinheit eine lenkbare Achse, also relativ zu der Lenkeinheit bzw. der Antriebseinheit verschwenkbare Räder, ähnlich einem Personenkraftwagen, aufweisen. Dies kann insbesondere mittels einer Achsschenkelbolzenlenkung der Einzelräder erfolgen. Selbstverständlich ist entsprechend der obigen Darstellung zur Federung der Antriebseinheit eine entsprechende Federung der Lenkeinheit möglich.

Beispielsweise kann das Fahrzeug an der Lenkeinheit als Sitz einen Kindersitz umfassen.

Des Weiteren kann die Lenkeinheit ein Steuerungsmodul zum Regeln und Steuern der Antriebseinheit umfassen, insbesondere ein abnehmbares Steuerungsmodul. Dieses ist körperlicher oder zumindest logischer Bestandteil des beschriebenen Bedienelements und ermöglicht einige der beschriebenen Funktionen des Bedienelements, wie beispielsweise die Geschwindigkeit, die Bremsen und/oder eine Hupe, oder ähnliches von einem zentralen Steuerungsmodul aus fernzusteuern. Dieses ist zur besseren und leichteren Bedienbarkeit durch den Fahrer an der Lenkeinheit angeordnet. Um dennoch eine einfache Trennbarkeit des Fahrzeugs in Lenkeinheit und Antriebseinheit, beispielsweise zu Transportzwecken, zu erzielen, ist das Steuerungsmodul von der Lenkeinheit abnehmbar ausgebildet. Es müssen somit keine aufwendigen lösbaren elektrischen Verbindungen zwischen der Lenkeinheit und der Antriebseinheit vorgesehen werden.

Außerdem wird ein mehrachsiges Fahrzeug zum Befördern mindestens eines Passagiers mit einer Antriebseinheit und einer mit der Antriebseinheit gekoppelten Lenkeinheit bereitgestellt, wobei die Antriebseinheit und die Lenkeinheit jeweils gemäß der Beschreibung ausgebildet sind.

Gemäß einer Ausführungsform des mehrachsigen Fahrzeugs ist die Lenkeinheit in dem gekoppelten Zustand um eine Achse der Lenkeinheit gekippt angeordnet und/oder in dem gekoppelten Zustand lösbar kommunikationstechnisch mit der Antriebseinheit zum Übertragen von Steuersignalen von dem Steuerungsmodul der Lenkeinheit an die Antriebseinheit verbunden, insbesondere an das Antriebsmodul.

Die beschriebene Verkippung der Lenkeinheit ist insbesondere für den Fall vorgesehen, dass die Lenkeinheit mehr als eine Achse bzw. zusätzliche Räder, insbesondere Stützräder aufweist. In diesem Fall kann die Lenkeinheit um eine Achse der Lenkeinheit gekippt sein, in der die weiteren Achsen bzw. Räder angehoben sind und somit keinen Bodenkontakt mehr aufweisen. Auf diese Weise ist die Lenkeinheit und somit das gesamte Fahrzeug leichter lenkbar.

Insbesondere erlaubt die beschriebene Verwendung bekannter Gefährte die Möglichkeit mittels einer geringfügigen Umrüstung, insbesondere durch einfaches Anbringen eines Gegenstücks für die Kopplungsvorrichtung der Antriebseinheit an der Lenkeinheit auf einfache und kostengünstige Art und Weise diese Gefährte zum Einsatz mit der Antriebseinheit umzurüsten.

Insbesondere die Verwendung des Gehwagens bzw. des Rollators bieten die Möglichkeit ein entsprechendes Fahrzeug für gehbehinderte Menschen anzubieten, das leicht zu handhaben aber auch leicht zu transportieren ist, so dass eine besonders vorteilhafte Möglichkeit einer erweiterten Mobilität für den Nutzer bereitgestellt werden kann.

Des Weiteren kann das Fahrzeug bzw. dessen Komponenten, also die Lenkeinheit und die Antriebseinheit, zusätzliche Vorrichtungen, wie beispielsweise Anbauten und Ergänzungen, insbesondere Beleuchtungen und Reflektoren, umfassen, um das Fahrzeug für eine Nutzung im öffentlichen Straßenverkehr vorzusehen. Je nach Land sind hier gemäß der jeweiligen Straßenverkehrsordnung verschiedene Vorgaben zu erfüllen, um eine entsprechende Straßenzulassung für das Fahrzeug zu erhalten.

Die Erfindung wird nachfolgend unter Bezugnahme auf die beigefügten Zeichnungen anhand zweier Ausführungsbeispiele beschrieben. Darin zeigen:
Fig. 1 eine Seitenansicht einer ersten Ausführungsform eines erfindungsgemäßen Fahrzeugs,
Fig. 2 eine Draufsicht der ersten Ausführungsform des erfindungsgemäßen Fahrzeugs nach Fig. 1,
Fig. 3 eine Seitenansicht der ersten Ausführungsform des erfindungsgemäßen Fahrzeugs nach Fig. 1 und 2 mit angeklapptem Anhänger,
Fig. 4 eine Draufsicht des erfindungsgemäßen Fahrzeugs nach Fig. 3,
Fig. 5 eine Seitenansicht einer zweiten Ausführungsform eines erfindungsgemäßen Fahrzeugs,
Fig. 6 eine Draufsicht der zweiten Ausführungsform des erfindungsgemäßen Fahrzeugs nach Fig. 5, und
Fig. 7 eine Hinteransicht des erfindungsgemäßen Fahrzeugs.

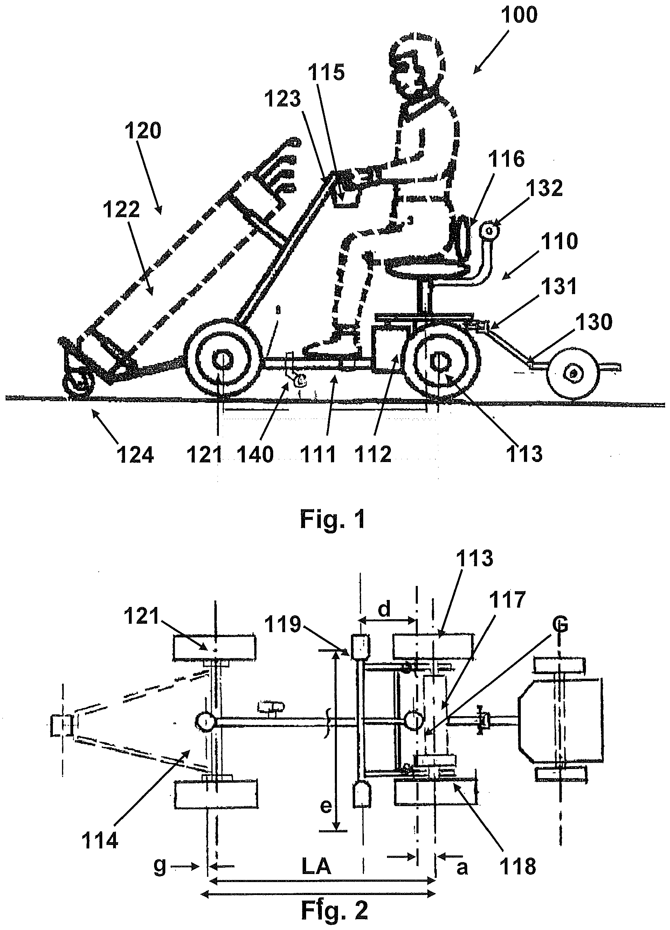

Fig. 1 und Fig. 2 zeigen eine erste Ausführungsform eines erfindungsgemäßen Fahrzeugs 100 mit einer Antriebseinheit 110, einer Lenkeinheit 120 und einem Anhänger 130. Die Antriebseinheit 110 umfasst ein Fahrgestell 111, welches als Trägerstruktur der Antriebseinheit 110 ausgebildet ist. Ein Antriebsmodul 112 ist ebenfalls umfasst, welches einen Motor 117 und einen Energiespeicher zum Antrieb des Motors 117 umfasst. Der Motor 117 ist zum Antrieb der ersten Achse 113 mit dieser mittels eines Getriebes 118 gekoppelt. Des Weiteren umfasst die Antriebseinheit 110 eine Deichsel mit einer Kopplungsvorrichtung 114, welche zum verschwenkbaren und somit lenkbaren Koppeln der Antriebseinheit 110 mit der Lenkeinheit 120 vorgesehen ist und im gekoppelten Zustand eine sichere Verbindung beider Elemente gewährleistet. Die Antriebseinheit 110 kann somit von der Lenkeinheit 120 abgekoppelt werden, so dass die Lenkeinheit 120 abnehmbar und handgeführt benutzbar ist. Die Antriebseinheit 110 kann zum Abstellen ein zusätzliches Stützrad 140 umfassen.

Die Antriebseinheit 110 ist derart konfiguriert, dass ein Gesamtmassenschwerpunkt G (Position lediglich schematisch angedeutet) des Fahrzeugs 100 in Längsrichtung bzw. Fahrtrichtung vor der ersten Achse 113 in einem Abstand a angeordnet ist. Hierdurch wird eine besonders hohe Fahrstabilität auch auf schwierigem und unebenem Gelände erzielt. Hierzu trägt insbesondere eine Anordnung des Antriebsmoduls 112 mit seinen Komponenten in direkter Nähe zu der ersten Achse 113 bei. Auch der Sitz ist derart angeordnet, dass ein Schwerpunkt der Sitzanordnung 116 sowohl im unbelasteten Zustand als auch in einem mit dem Passagier belasteten Zustand vor der ersten Achse 113 liegt. Die Füße des Passagiers können auf den seitlich an dem Fahrgestell 111 vorgesehenen Fußrasten 119 aufgestellt werden. Dies ermöglicht in Kombination mit der Sitzanordnung 116 eine definierte Sitzposition und somit eine reproduzierbare Schwerpunktlage des Passagiers.

Ferner ist ein Bedienelement 115 mit Steuerungsmodul vorgesehen, welches in der dargestellten Ausführungsform an einem als Handgriff ausgebildeten Lenkerabschnitt 123 der Lenkeinheit 120 angeordnet ist. Eine kommunikationstechnische Verbindung zu dem Antriebsmodul 112 kann beispielsweise drahtlos oder über eine fest in der Antriebseinheit 110 und der Lenkeinheit 120 integrierte Verbindung erfolgen. Selbstverständlich sind ebenso andere bekannte Verbindungsmöglichkeiten möglich.

Die Lenkeinheit 120 weist eine Achse 121 sowie ein vorderes Stützrad 124 auf. Um eine einfachere Lenkbarkeit der Lenkeinheit 120 zu ermöglichen, kann die Lenkeinheit 120 derart mit der Antriebseinheit 110 verbunden sein, dass die Lenkeinheit 120 leicht um die Achse 121 gekippt angeordnet ist, so dass das Stützrad 124 vom Boden abgehoben ist. Die Lenkeinheit 120 ist außerdem zur Aufnahme einer Last 122 ausgebildet, die beispielsweise den dargestellten Golfbag aber selbstverständlich auch andere geeignete Lasten umfassen kann.

Der Anhänger 130 ist lediglich optional vorgesehen und kann mindestens eine Achse umfassen. Ebenso sind jedoch auch mehrachsige Ausführungen möglich. Der Anhänger 130 ist über eine Anhängevorrichtung 131 mit der Antriebseinheit 110 verbunden. Diese Verbindung kann lediglich optional derart ausgestaltet sein, dass der Anhänger 130 als Stütze wirkt, um ein Kippen der Antriebseinheit 110 über die erste Achse 113 zusätzlich zu verhindern. Der Anhänger 130 kann zum Transport eines weiteren Passagiers ausgebildet sein. Dieser kann beispielsweise auf dem Anhänger stehen und sich an einem Haltegriff 132 festhalten.

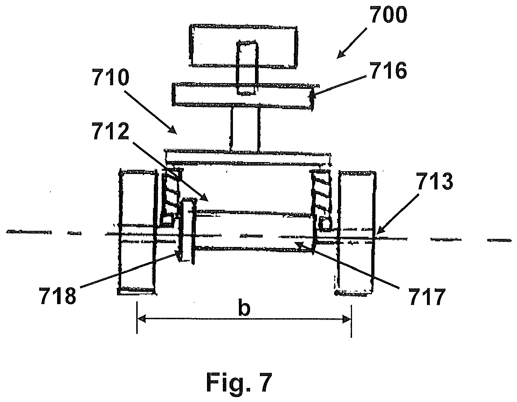

Der Motor 117 kann beispielsweise gemäß der Darstellung als Elektromotor ausgebildet sein. Rein beispielhaft, jedoch keinesfalls einschränkend zu verstehend, kann der Elektromotor als 24V, 36V oder 48V Gleichstrom-DC Motor ausgebildet sein. Üblicherweise ergeben sich Leistungswerte von ca. 1700 bis 1800W, insbesondere 1760W. Jedoch sollte eine Leistung des Antriebsmotors eine Mindestmotorleistung von 800W nicht unterschreiten. Wie bereits voranstehend und nachfolgend in Fig. 7 beschrieben, kann der Motor 117 (bzw. 717) derart positioniert werden, dass ein Differential links oder rechts neben dem Motor angeordnet ist, welcher wiederum in geringem Abstand parallel zu der anzutreibenden Achse angeordnet ist, um eine niedrige Schwerpunktlage bereitzustellen.

Anstelle des genannten Elektromotors sind ebenso mindestens ein Paar Nabenmotoren oder ein Verbrennungsmotor, insbesondere ein Kraftstoffmotor oder ein Brennstoffmotor einsetzbar.

Nicht dargestellt ist in den Figuren eine Bremsvorrichtung zum Bremsen des Fahrzeugs. Diese kann beispielsweise eine Motorbremse oder eine elektrische Magnetfeststellbremse umfassen. Ebenfalls nicht dargestellt, jedoch optional vorsehbar ist ein Rückwärtsgang und eine Entkopplung des Differentials durch einen mechanischen Hebel.

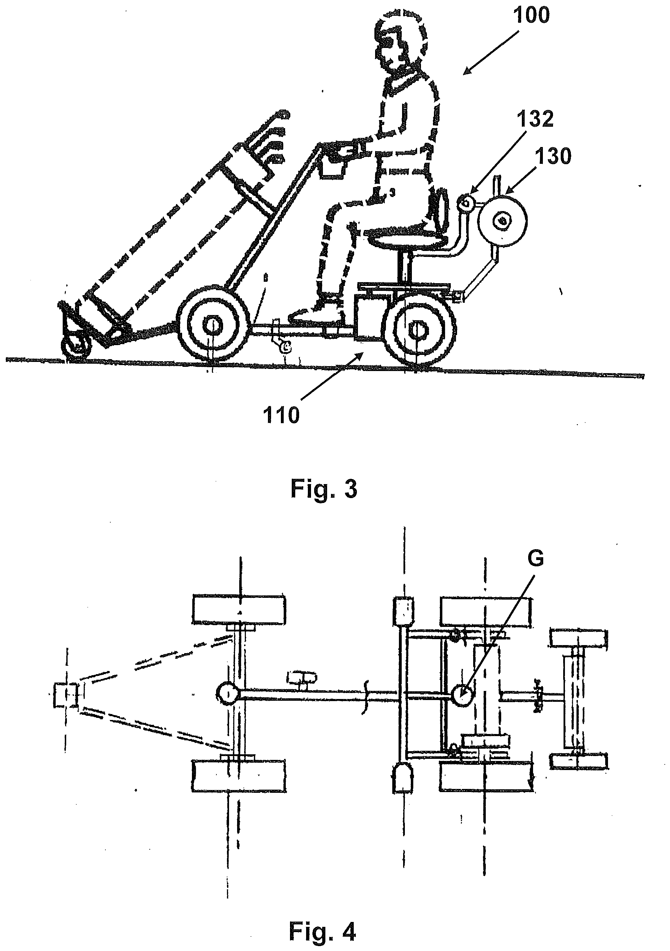

Fig. 3 und Fig. 4 zeigen die erste Ausführungsform des erfindungsgemäßen Fahrzeugs 100 gemäß den Fig. 1 und 2, so dass auf die gegebene Beschreibung verwiesen wird. Im Gegensatz zu den Fig. 1 und 2 ist jedoch der Anhänger 130 wahlweise hochgeklappt und somit ohne Bodenkontakt. Der Anhänger 130 kann hierzu beispielsweise an dem Handgriff 132 lösbar befestigt werden.

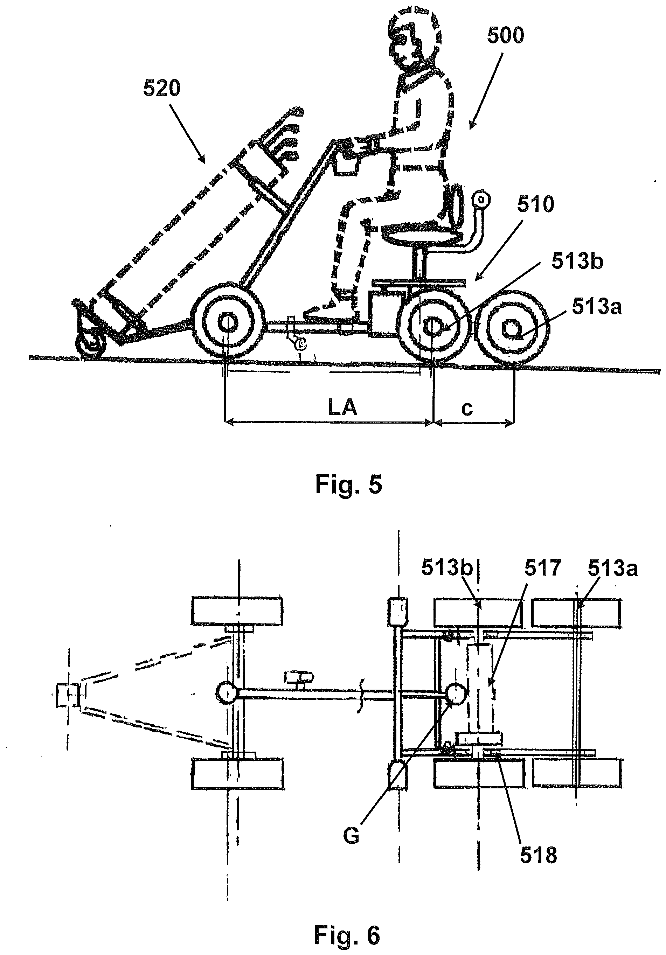

Fig. 5 und Fig. 6 zeigen eine Seitenansicht einer zweiten Ausführungsform eines erfindungsgemäßen mehrachsigen Fahrzeugs 500 mit einer Antriebseinheit 510 und einer hiermit gekoppelten Lenkeinheit 520. Die Lenkeinheit 520 ist entsprechend der in den Fig. 1 bis 4 beschriebenen Ausführungsform ausgebildet, so dass auf die gegebene Beschreibung verwiesen werden kann. Auch die wesentlichen Merkmale der Antriebseinheit 510 stimmen mit der dort beschriebenen Antriebseinheit 110 überein.

Unterschiede ergeben sich jedoch in einer Ausgestaltung der Achsen der Antriebseinheit 510. Diese sieht in der dargestellten Ausführungsform eine Doppelachse mit einer ersten Achse 513a und einer zweiten Achse 513b vor. Im direkten Vergleich tritt die zweite Achse 513b an die Stelle der in den Figuren 1 bis 4 beschriebenen ersten Achse 113, wobei die erste Achse 513a als hinterste Achse in Längsrichtung des Fahrzeugs bzw. in Fahrtrichtung betrachtet, hinter der zweiten Achse 513b angeordnet ist. Mit Hilfe der Doppelachse kann eine zusätzliche Fahrstabilität und insbesondere eine Kippsicherheit bereitgestellt werden. In diesem Fall ist die zweite Achse 513b von einem Motor 517 über ein Getriebe 518 angetrieben. Die erste Achse 513a ist dagegen nicht angetrieben. Selbstverständlich kann die erste Achse 513a ebenfalls angetrieben oder alleine anstelle der zweiten Achse 513b angetrieben ausgebildet sein.

Fig. 7 zeigt eine Rückansicht eines mehrachsigen Fahrzeugs 700 mit dessen Antriebseinheit 710 umfassend ein Antriebsmodul 712 und eine Sitzanordnung 716. Das Antriebsmodul 712 weist eine erste Achse 713 auf, an der an einem linken Ende und an einem entgegengesetzt angeordneten zweiten Ende jeweils ein Rad vorgesehen ist. Das Antriebsmodul 712 umfasst außerdem einen Motor 717, der über ein Getriebe 718 mit der ersten Achse 713 zum Antrieb des Fahrzeugs 700 gekoppelt ist. Gemäß der Darstellung ist der Motor 717 nahe der Achse und parallel zu dieser angeordnet, so dass sich eine besonders niedrige und damit günstige Schwerpunktlage ergibt.

Mit Bezug auf die Fig. 1 bis 7 werden zur Verdeutlichung besonders vorteilhafter Proportionen des Fahrzeugs 100, 500 und 700 in den Fig. 1 bis 7 im Folgenden gewisse Abmessungen rein beispielhaft auf eine definierte Längeneinheit LA des Fahrzeugs rückbezogen. Diese Längeneinheit LA wird durch den Abstand der ersten Achse 113 bzw. zweiten Achse 513b und der Achse 121 bzw. 521 der Lenkeinheit 120, 520 gebildet.

Entsprechend beträgt eine vorteilhafte Breite der Reifen der Antriebseinheit 6,5% bis 11% von LA, so dass sich eine möglichst geringe Flächenbelastung bei dennoch guter Handhabbarkeit ergibt. Ein Raddurchmesser an der ersten oder zweiten Achse der Antriebseinheit kann beispielsweise einen Anteil zwischen 22% und 38% von LA aufweisen, vorzugsweise 35% von LA.

Mit Bezug auf Fig. 7 beträgt eine Spurbreite b der Antriebseinheit beispielsweise 54% bis 87% von LA, vorzugsweise 65% von LA.

Das Fahrzeug ist in vorteilhafter Art und Weise derart ausgestaltet, dass ein Gesamtmassenschwerpunkt im Falle einer einzelnen Achse der Antriebseinheit (Fig. 1 bis Fig. 4) in einem Abstand a von 5% bis 20% von LA vor der einzelnen Achse (erste Achse 113) positioniert ist, vorzugsweise in einem Abstand von 12% von LA. Im Falle einer Doppelachse oder mehrerer Achsen wird die Längeneinheit durch den Abstand der Achse 121 der Lenkeinheit 520 zu der zweiten Achse 513b definiert und entsprechend liegt der Gesamtmassenschwerpunkt mindestens in dem genannten Abstand a vor der ersten Achse 513a, vorzugsweise jedoch zu der zweiten Achse 513b.

Im genannten Fall einer Doppelachse (vgl. Fig. 5 und 6) ist ein minimaler Abstand c der ersten Achse von der zweiten Achse von einem Raddurchmesser abhängig und muss entsprechend größer gewählt werden. Beträgt beispielsweise ein gewählter Raddurchmesser 34% von LA, so kann als Abstand c ein Wert von 37% von LA gewählt werden.

Eine beispielhafte Anordnung der Fußrasten kann in einem Abstand d von 20% bis 30% von LA von dem Gesamtmassenschwerpunkt G erfolgen. Eine seitliche Beabstandung e der Fußrasten zueinander kann ebenfalls beispielsweise zwischen 60% bis 80% von LA betragen, vorzugsweise 72%.

Die Sitzanordnung kann beispielsweise eine Mindesthöhe h über dem Boden von 50% bis 87% von LA aufweisen. Vorzugsweise ist die Sitzhöhe zwischen 56% für eine Körpergröße von 140cm und 87% für eine Körpergröße von 210 eines Fahrers wählbar.

Die ebenfalls beschriebene Deichsel kann an ihrem vorderen Ende die Kopplungsvorrichtung umfassen, wobei ein Abstand f zwischen der Kopplungsvorrichtung, insbesondere einem Kopplungskopfpunkt zum direkten Verbinden mit der Lenkeinheit zu der ersten Achse oder der zweiten Achse beispielsweise 80% bis 110% von LA betragen, insbesondere 102% von LA.

Auch für die Lenkeinheit lassen sich beispielhafte Werte angeben. So kann eine Spurbreite der Lenkeinheit 40% bis 70% von LA, vorzugsweise 65% von LA betragen. Des Weiteren liegt der bereits erwähnte Kopplungspunkt, also jener Punkt, an dem die Kopplung zwischen Lenkeinheit und der Kopplungsvorrichtung der Antriebseinheit erfolgt, in einem Bereich zwischen 12% von LA vor der Achse 121 der Lenkeinheit und bis zu 10% LA hinter dieser Achse 121 (Abstand g). Vorzugsweise beträgt dieser Abstand g 2,2% von LA vor der Achse 121.

Die Räder der Lenkeinheit können eine Breite von 6,5% bis 11% von LA aufweisen, so dass sich eine möglichst geringe Flächenbelastung bei dennoch guter Handhabbarkeit ergibt. Ein Raddurchmesser kann beispielsweise einen Anteil zwischen 22 und 38% von LA aufweisen, vorzugsweise 35% von LA.

### Bezugszeichenliste

- G: Gesamtmassenschwerpunkt
- a: Abstand Gesamtmassenschwerpunkt zu erster Achse
- b: Spurbreite Antriebseinheit
- c: Abstand erste Achse zu zweiter Achse
- d: Abstand Fußrasten zu Gesamtmassenschwerpunkt
- e: seitlicher Abstand der Fußrasten zueinander
- f: Abstand Kopplungspunkt zu erster Achse
- g: Abstand Kopplungspunkt zu Achse Lenkeinheit
- 100: Fahrzeug
- 110: Antriebseinheit
- 111: Fahrgestell
- 112: Antriebsmodul
- 113: erste Achse
- 114: Kopplungsvorrichtung
- 115: Bedienelement
- 116: Sitzanordnung
- 117: Motor
- 118: Getriebe
- 119: Fußrasten
- 120: Lenkeinheit
- 121: Achse Lenkeinheit
- 122: Last
- 123: Lenker
- 124: Stützrad Lenkeinheit
- 130: Anhänger
- 131: Anhängevorrichtung
- 132: Haltegriff

- 500: Fahrzeug
- 510: Antriebseinheit
- 513a: erste Achse
- 513b: zweite Achse
- 517: Motor
- 518: Getriebe
- 520: Lenkeinheit
- 521: Achse Lenkeinheit

- 700: Fahrzeug
- 710: Antriebseinheit
- 712: Antriebsmodul
- 713: erste Achse
- 716: Sitzanordnung
- 717: Motor
- 718: Getriebe

## Patentansprüche

1. Mehrachsiges Fahrzeug zum Befördern mindestens eines Passagiers mit einer Antriebseinheit (110,510) und einer mit der Antriebseinheit (110,510) gekoppelten Lenkeinheit (120,520), wobei die Antriebseinheit (110,510) zum Koppeln mit der Lenkeinheit (120, 520) zur Beförderung des mindestens einen Passagiers und mit Folgendem ausgebildet ist:
- einem Fahrgestell (111), welches als Trägerstruktur der Antriebseinheit (110,510) ausgebildet ist,
- einem Antriebsmodul (112) mit einem Motor (117,517) und einer ersten Achse (113) mit Rädern zum Antreiben des Fahrzeugs (100,500),
- einer Kopplungsvorrichtung (114) zum Koppeln der Antriebseinheit (110,510) mit der Lenkeinheit (120,520),
- einem Bedienelement (115) zum Bedienen des Antriebsmoduls (112),
- einer Sitzanordnung (116) zum Stützen des Passagiers,
wobei die Antriebseinheit (110,510) derart konfiguriert ist, dass ein Gesamtmassenschwerpunkt (G) der Antriebseinheit (110,510) in Längsrichtung des Fahrzeugs (110,500) vor der ersten Achse (113) angeordnet ist,
das Fahrgestell (111) eine Federung der ersten (113,513a) Achse umfasst, und
die Kopplungsvorrichtung (114) eine Kugelkopfkupplung zum Verbindung der Antriebseinheit (110,510) mit der Lenkeinheit (120,520) umfasst,
wobei die Lenkeinheit zum Koppeln mit der Antriebseinheit (110,510) ausgebildet ist, und die Kopplungsvorrichtung (114) zum Verbindung der Antriebseinheit (110,510) mit der Lenkeinheit (120,520) eine Kugelkopfkupplung umfasst, wobei die Lenkeinheit (120,520) mindestens eine Achse (121,521) mit Rädern umfasst, wobei die Lenkeinheit (120,520) in einem von der Antriebseinheit (110,510) abgekoppelten Zustand ein eigenständig nutzbares, fahrbares Gefährt mit der mindestens einen Achse (121,521) bildet,
**dadurch gekennzeichnet, dass**
die Lenkeinheit (120,520) als Golftrolley zur Aufnahme von Golfbags ausgebildet ist.

2. Mehrachsiges Fahrzeug nach Anspruch 1, **dadurch gekennzeichnet, dass** das Antriebsmodul (112) außerdem einen Energiespeicher zum Betreiben des Motors (117) und/oder außerdem mindestens eine zweite Achse (513b) mit Rädern umfasst, wobei die zweite Achse (513b) in Längsrichtung des Fahrzeugs (100,500) vor der ersten Achse (113) und parallel zu dieser angeordnet ist.

3. Mehrachsiges Fahrzeug nach Anspruch 1 oder 2, **dadurch gekennzeichnet, dass** der Motor (117), 517) eine Motorwelle umfasst, welche parallel zu der ersten (113,513a) und/oder der mindestens einen zweiten Achse (513b) angeordnet ist und mittels Übertragungsmitteln (118) eine Drehbewegung der Motorwelle in eine Drehbewegung der ersten (113,513a) und/oder der zweiten Achse (513b) und/oder der jeweiligen Räder zum Antreiben des Fahrzeugs (100,500) überträgt.

4. Mehrachsiges Fahrzeug nach einem der Ansprüche 1 bis 3, **dadurch gekennzeichnet, dass** die erste Achse (113,513a) und/oder die mindestens eine zweite Achse (513b) jeweils ein Differential umfassen.

5. Mehrachsiges Fahrzeug nach Anspruch 1 oder 2, **dadurch gekennzeichnet, dass** der Motor (117,517) mindestens ein Paar Nabenmotoren mit jeweils einer Motorwelle umfasst, wobei die beiden Motorwellen des Nabenmotorenpaars die erste (113,513a) oder die zweite Achse (513b) bilden und jeweils einer der Nabenmotoren einem linken Rad und der andere Nabenmotor dem rechten Rad der ersten (113,513a) oder zweiten Achse (513b) zugeordnet sind.

6. Mehrachsiges Fahrzeug nach einem der vorhergehenden Ansprüche 1 bis 5, **dadurch gekennzeichnet, dass** ein Massenschwerpunkt der Sitzanordnung (116) in einem unbelasteten und/oder in einem durch einen Passagier belasteten Zustand in Längsrichtung des Fahrzeuges vor der ersten Achse (113,513a) angeordnet ist.

7. Mehrachsiges Fahrzeug nach einem der Ansprüche 1 bis 6, **dadurch gekennzeichnet, dass** das Fahrgestell (111) einen steifen Rahmen umfasst, welcher insbesondere teil- oder faltbar ausgebildet ist, und/oder außerdem Fußrasten (119) umfasst zum Aufsetzen von Füßen des mindestens einen Passagiers, wobei die Fußrasten (119) in Längsrichtung des Fahrzeugs (100,500) vor der ersten Achse (113,513a) angeordnet sind.

8. Mehrachsiges Fahrzeug nach einem der voranstehenden Ansprüche 1 bis 7, **dadurch gekennzeichnet, dass** das Fahrgestell (111) eine Federung der mindestens einen zweiten Achse (513b) umfasst.

9. Mehrachsiges Fahrzeug nach einem der voranstehenden Ansprüche 1 bis 8, **dadurch gekennzeichnet, dass** die Federung der ersten (113,513a) und/oder der mindestens einen zweiten Achse (513b) mindestens einen Stoßdämpfer und/oder mindestens eine Feder und/oder mindestens einen Federarm für eine federnde Aufhängung der ersten (113,513a) und/oder zweiten Achse (513b) umfasst.

10. Mehrachsiges Fahrzeug nach einem der Ansprüche 1 bis 9, **dadurch gekennzeichnet, dass** die Kopplungsvorrichtung (114) eine Deichsel umfasst, insbesondere eine starr, lenkbar, klappbar, teilbar und/oder abnehmbar ausgebildete Deichsel.

11. Mehrachsiges Fahrzeug nach einem der Ansprüche 1 bis 10, **dadurch gekennzeichnet, dass** das Antriebsmodul (112) eine Anhängevorrichtung (131) zum Verbinden mit einer Anhängereinheit (130) umfasst, insbesondere eine zum Transportieren mindestens eines weiteren Passagiers ausgebildete Anhängereinheit (130).

12. Mehrachsiges Fahrzeug nach einem der Ansprüche 1 bis 11, **dadurch gekennzeichnet, dass** die Antriebseinheit (110,510) Bremsen umfasst, die dazu ausgebildet sind, an der ersten (113,513a) und/oder der mindestens einen zweiten Achse (513b) und/oder an mindestens einem der Räder im Bedarfsfall eine Bremswirkung zum Bremsen des Fahrzeugs (100,500) einzubringen.

13. Mehrachsiges Fahrzeug nach einem der Ansprüche 1 bis 12, **dadurch gekennzeichnet, dass** die Lenkeinheit (120,520) ein Steuerungsmodul zum Regeln und Steuern der Antriebseinheit umfasst, insbesondere ein abnehmbares Steuerungsmodul.

14. Mehrachsiges Fahrzeug nach einem der Ansprüche 1 bis 13, **dadurch gekennzeichnet, dass** die Lenkeinheit (120,520) in dem gekoppelten Zustand um eine Achse (121,521) der Lenkeinheit (120,520) gekippt angeordnet ist und/oder in dem gekoppelten Zustand lösbar kommunikationstechnisch mit der Antriebseinheit (110,510) zum Übertragen von Steuersignalen von dem Steuerungsmodul der Lenkeinheit (120,520) an die Antriebseinheit (110,510) verbunden ist, insbesondere an das Antriebsmodul (112).

## Claims

1. Multi-axis vehicle for transporting at least one passenger having a drive unit (110, 510) and a steering unit (120, 520) which is coupled to the drive unit (110, 510), wherein the drive unit (110, 510) is formed for coupling to the steering unit (120, 520) to transport the at least one passenger and having the following:
- a chassis (111) which is formed as a carrier structure of the drive unit (110, 510),
- a drive module (112) having a motor (117, 517) and a first axis (113) having wheels to drive the vehicle (100, 500),
- a coupling device (114) for coupling the drive unit (110, 510) to the steering unit (120, 520),
- an operating element (115) for operating the drive module (112),
- a seating arrangement (116) for supporting the passenger,
wherein the drive unit (110, 510) is configured in such a way that a total centre of mass (G) of the drive unit (110, 510) is arranged in front of the first axis (113) in the longitudinal direction of the vehicle (110, 500),
the chassis (111) comprises suspension of the first (113, 513a) axis, and
the coupling device (114) comprises a spherical head coupling for connecting the drive unit (110, 510) to the steering unit (120, 520),
wherein the steering unit is formed for coupling to the drive unit (110, 510), and the coupling device (114) comprises a spherical head coupling for connecting the drive unit (110, 510) to the steering unit (120, 520), wherein the steering unit (120, 520) comprises at least one axis (121, 521) having wheels, wherein the steering unit (120, 520), in a state decoupled from the drive unit (110, 510), forms an independently useable, moveable vehicle having at least one axis (121, 521),
**characterised in that**
the steering unit (120, 520) is formed as a golf trolley for receiving golf bags.

2. Multi-axis vehicle according to claim 1, **characterised in that** the drive module (112) also comprises an energy store for operating the motor (117) and/or also at least one second axis (513b) having wheels, wherein the second axis (513b) is arranged in front of the first axis (113) and in parallel to this in the longitudinal direction of the vehicle (100, 500).

3. Multi-axis vehicle according to claim 1 or 2, **characterised in that** the motor (117, 517) comprises a motor shaft which is arranged in parallel to the first (113, 513a) and/or the at least one second axis (513b) and, by means of transmission means (118), transfers a rotational movement of the motor shaft into a rotational movement of the first (113, 513a) and/or the second axis (513b) and/or the respective wheels to drive the vehicle (100, 500).

4. Multi-axis vehicle according to one of claims 1 to 3, **characterised in that** the first axis (113, 513a) and/or the at least one second axis (513b) respectively comprise a differential.

5. Multi-axis vehicle according to claim 1 or 2, **characterised in that** the motor (117, 517) comprises at least one pair of hub motors each having a motor shaft, wherein the two motor shafts of the pair of hub motors form the first (113, 513a) or the second axis (513b) and one of the hub motors is respectively allocated to a left wheel and the other hub motor is allocated to the right wheel of the first (113, 513a) or second axis (513b).

6. Multi-axis vehicle according to one of the preceding claims 1 to 5, **characterised in that** a centre of mass of the seating arrangement (116) is arranged in front of the first axis (113, 513a) in the longitudinal direction of the vehicle in an unloaded state and/or in a state loaded by a passenger.

7. Multi-axis vehicle according to one of claims 1 to 6, **characterised in that** the chassis (111) comprises a rigid frame which is formed to be separable or foldable in particular and/or also comprises footrests (119) for the placement of the feet of the at least one passenger, wherein the footrests (119) are arranged in front of the first axis (113, 513a) in the longitudinal direction of the vehicle (100, 500).

8. Multi-axis vehicle according to one of the preceding claims 1 to 7, **characterised in that** the chassis (111) comprises suspension of the at least one second axis (513b).

9. Multi-axis vehicle according to one of the preceding claims 1 to 8, **characterised in that** the suspension of the first (113, 513a) and/or of the at least one second axis (513b) comprises at least one shock absorber and/or at least one spring and/or at least one spring arm for resilient suspension of the first (113, 513a) and/or second axis (513b).

10. Multi-axis vehicle according to one of claims 1 to 9, **characterised in that** the coupling device (114) comprises a drawbar, in particular a drawbar which is formed to be rigid, steerable, foldable, separable and/or removable.

11. Multi-axis vehicle according to one of claims 1 to 10, **characterised in that** the drive module (112) comprises a towing device (131) for connection to a trailer unit (130), in particular a trailer unit (130) formed for transporting at least one additional passenger.

12. Multi-axis vehicle according to one of claims 1 to 11, **characterised in that** the drive unit (110, 510) comprises brakes which are formed to introduce a braking effect to the first (113, 513a) and/or the at least one second axis (513b) and/or to at least one of the wheels, when required, to slow down the vehicle (100, 500).

13. Multi-axis vehicle according to one of claims 1 to 12, **characterised in that** the steering unit (120, 520) comprises a control module for regulating and controlling the drive unit, in particular a removable control module.

14. Multi-axis vehicle according to one of claims 1 to 13, **characterised in that** the steering unit (120, 520) is arranged in the coupled state to be tilted about an axis (121, 521) of the steering unit (120, 520) and/or in the coupled state is releasably connected to the drive unit (110, 510) with communication technology to transfer control signals from the control module of the steering unit (120, 520) to the drive unit (110, 510), in particular to the drive module (112).

## Revendications

1. Véhicule à plusieurs essieux destiné à transporter au moins un passager comprenant une unité d'entraînement (110, 510) et une unité de direction (120, 520) couplée à l'unité d'entraînement (110, 510), l'unité d'entraînement (110, 510) étant réalisée pour être couplée à l'unité de direction (120, 520) de façon à permettre de transporter le passager et comportant :
- un châssis (111) qui est réalisé sous la forme de structure de support de l'unité d'entraînement (110, 510),
- un module d'entraînement (112) comprenant un moteur (117, 517) et un premier essieu (113) équipé de roues d'entraînement du véhicule (100, 500),
- un dispositif d'accouplement (114) permettant de coupler l'unité d'entraînement (110, 510) avec l'unité de direction (120, 520),
- un élément de manoeuvre (115) permettant de manoeuvrer le module d'entraînement (112),
- un système de siège (116) sur lequel peut s'appuyer le passager,
- l'unité d'entraînement (110, 510) étant conformée de sorte que le centre de gravité global (G) de l'unité d'entraînement (110, 510) soit situé à l'avant du premier essieu (113) dans la direction longitudinale du véhicule (110, 510),
- le châssis (111) comprend une suspension du premier essieu (113, 513a), et
- le dispositif d'accouplement (114) comprend une attache à bille permettant de relier l'unité d'entraînement (110, 510) avec l'unité de direction (120, 520),
- l'unité de direction étant réalisée pour permettre son couplage avec l'unité d'entraînement (110, 510) et le dispositif d'accouplement (114) comprenant une attache à bille pour permettre de relier l'unité d'entraînement (110, 510) avec l'unité de direction (120, 520),
- l'unité de direction (120, 520) comprenant au moins un essieu (121, 521) équipé de roues, et lorsqu'elle n'est pas couplée à l'unité d'entraînement (110, 510), l'unité de direction (120, 520) formant un engin mobile utilisable de manière autonome équipé d'au moins un essieu (121, 521),
**caractérisé en ce que**
l'unité de direction (120, 520) est réalisée sous la forme d'un chariot de golf destiné à recevoir des sacs de golf.

2. Véhicule à plusieurs essieux conforme à la revendication 1,
**caractérisé en ce que**
le module d'entraînement (112) comprend en outre un accumulateur d'énergie pour permettre d'actionner le moteur (117) et/ou au moins un second essieu (513b) équipé de roues, le second essieu (513b) étant situé à l'avant du premier essieu (113) dans la direction longitudinale du véhicule (100, 500) et parallèlement à celui-ci.

3. Véhicule à plusieurs essieux conforme à la revendication 1 ou 2,
**caractérisé en ce que**
le moteur (117, 517) comprend un arbre moteur qui est parallèle au premier essieu (113, 513a) et/ou au second essieu (513b) et transfère par l'intermédiaire de moyens de transmission (118) le mouvement de rotation de l'arbre moteur selon un mouvement de rotation du premier essieu (113, 513a) et/ou du second essieu (513b) et/ou des roues respectives pour permettre d'entraîner le véhicule (100, 500).

4. Véhicule à plusieurs essieux conforme à l'une des revendications 1 à 3,
**caractérisé en ce que**
le premier essieu (113, 513a) et/ou le second essieu (513b) comprend(comprennent) un différentiel.

5. Véhicule à plusieurs essieux conforme à la revendication 1 ou 2,
**caractérisé en ce que**
le moteur (117, 517) comprend au moins une paire de moteurs logés dans un moyeu ayant chacun un arbre moteur, les deux arbres moteurs de la paire de moteurs de moyeu formant le premier essieu (113, 513a) ou le second essieu (513b) et l'un des moteurs de moyeu respectif étant associé à la roue gauche tandis que l'autre moteur de moyeu est associé à la roue droite du premier essieu (113, 513a) ou du second essieu (513b).

6. Véhicule à plusieurs essieux conforme à l'une des revendications précédentes 1 à 5,
**caractérisé en ce que**
le centre de gravité du dispositif de siège (116) est situé, à l'avant du premier essieu (113, 513a) dans la direction longitudinale du véhicule lorsqu'il n'est pas chargé ou lorsqu'il est chargé par un passager.

7. Véhicule à plusieurs essieux conforme à l'une des revendications 1 à 6,
**caractérisé en ce que**
le châssis (111) comprend un cadre rigide qui est en particulier partiellement ou totalement pliable, et/ou comporte en outre des repose-pieds externes (119) destinés à recevoir les pieds du passager, les repose-pieds (119) étant situés à l'avant du premier essieu (113, 513a) dans la direction longitudinale du véhicule (100, 500).

8. Véhicule à plusieurs essieux conforme à l'une des revendications précédentes 1 à 7,
**caractérisé en ce que**
le châssis (111) comprend une suspension du second essieu (513b).

9. Véhicule à plusieurs essieux conforme à l'une des revendications précédentes 1 à 8,
**caractérisé en ce que**
la suspension du premier essieu (113, 513a) et/ou la suspension du second essieu (513b) comprend(comprennent) au moins un amortisseur de choc et/ou au moins un ressort et/ou au moins un bras de ressort pour permettre la suspension élastique du premier essieu (113a, 513a) et/ou du second essieu (513b).

10. Véhicule à plusieurs essieux conforme à l'une des revendications 1 à 9,
**caractérisé en ce que**
le dispositif d'accouplement (114) comprend un timon, en particulier un timon rigide, orientable, rabattable, subdivisable et/ou amovible.

11. Véhicule à plusieurs essieux conforme à l'une des revendications 1 à 10,
**caractérisé en ce que**
le module d'entraînement (112) comprend un dispositif d'accrochage (131) pour permettre sa connexion avec une unité de remorque (130), en particulier une unité de remorque (130) réalisée pour permettre de transporter au moins un autre passager.

12. Véhicule à plusieurs essieux conforme à l'une des revendications 1 à 11,
**caractérisé en ce que**
l'unité d'entraînement (110, 510) comprend des freins qui sont réalisés pour permettre d'appliquer une action de freinage permettant de freiner le véhicule (100, 500) sur le premier essieu (113, 513a) et/ou sur le second essieu (513b) et/ou sur au moins l'une des roues, en cas de nécessité.

13. Véhicule à plusieurs essieux conforme à l'une des revendications 1 à 12,
**caractérisé en ce que**
l'unité de direction (120, 520) comprend un module de commande permettant de régler et de commander l'unité d'entraînement, et en particulier un module de commande amovible.

14. Véhicule à plusieurs essieux conforme à l'une des revendications 1 à 12,
**caractérisé en ce que**
lorsqu'elle est couplée, l'unité de direction (120, 520) est montée basculante autour d'un axe (121, 521), de cette unité (120, 520), et/ou est reliée à l'unité d'entraînement (110, 510), de façon amovible par la technique de communication avec l'unité d'entraînement (110, 510) pour permettre la transmission de signaux de commande du module de commande de l'unité de direction (120, 520) à l'unité d'entraînement (110, 510), en particulier au module d'entraînement (112).
